Europäisches Patentamt

European Patent Office

Office européen des brevets

(11) Publication number: **0 055 789**
**B1**

# EUROPEAN PATENT SPECIFICATION

(45) Date of publication of patent specification: **10.04.85**

(51) Int. Cl.⁴: **F 02 M 25/00, F 02 M 25/06**

(21) Application number: **81100014.0**

(22) Date of filing: **05.01.81**

(54) Combustion control system.

(43) Date of publication of application:
**14.07.82 Bulletin 82/28**

(45) Publication of the grant of the patent:
**10.04.85 Bulletin 85/15**

(84) Designated Contracting States:
**AT BE CH DE FR GB IT LI LU NL SE**

(56) References cited:
**FR-A- 999 735**
**US-A-4 027 635**
**US-A-4 112 892**
**US-A-4 132 247**
**US-A-4 183 338**

(73) Proprietor: **EUROPE ECONOMOTOR, LTD.**
**1052 Dwight Way**
**Berkeley California 94710 (US)**

(72) Inventor: **Lindberg, John Emery**
**1052 Dwight Way**
**Berkeley, California 94710 (US)**

(74) Representative: **Howden, Christopher Andrew et al**
**FORRESTER & BOEHMERT Widenmayerstrasse 4/I**
**D-8000 München 22 (DE)**

Courier Press, Leamington Spa, England.

## Description

The present invention relates to a control system for use with an internal combustion engine, and more particularly it relates to a control system for use in controlling gas supplies to an inlet manifold of an internal combustion engine.

Various control systems of this general type have been proposed before, and reference may be made to the control system disclosed in USA-patent specifications Nos. 4112892, 4132247 and 4183338.

The system disclosed in USA-specification 4112892 is adapted to be associated with an inlet manifold of an engine having a conventional butterfly valve constituting the throttle of the engine. A gas inlet opening is formed in the inlet manifold between the butterfly valve and the engine, and a vortex device is connected to this gas inlet opening. The vortex device has a chamber with a tangential inlet and a second substantially axial inlet. An axial outlet of the vortex device is connected to the said gas inlet opening. The tangential gas inlet opening of the vortex device is connected to a source of air at atmospheric pressure, and the axial inlet is connected to a supply of positive crankcase ventilation (PCV) gas.

It is to be noted that the arrangement described in USA-specification 4112892 draws air and PCV gas through the vortex device under the influence of the vacuum created between the butterfly valve and the engine.

It is known that vacuum created at this position is at its maximum when the throttle is closed (i.e. when the engine is decelerating) and is at a maximum when the throttle is fully opened (i.e. when the engine is accelerating). It has also been found that the maximum control needs to be exerted on the gases being introduced to an engine under accelerating conditions, that is to say the time when the control provided by the vortex device is needed most is precisely the same as the time when the quantity of gas passing through the vortex device is minimized due to the minimum vacuum present in the inlet manifold.

USA-patent specification No. 4132247 and 4183338 disclose control devices which have some points of similarity with that disclosed in USA-specification 4112892. Thus, again, in each of the devices described in these two latter USA-patent specifications a combustion engine has an intake manifold with a butterfly valve constituting a throttle and in each case there is a gas inlet opening into the intake manifold at a position located between the butterfly valve and the engine. A vortex device is provided, having a vortex chamber with a tangential inlet and a second substantially axial inlet, and an axial outlet which is connected to the gas inlet opening provided in the intake manifold. A source of positive crankcase ventilation (PCV) gas is connected to the axial inlet to the vortex device, and the tangential inlet is connected to a source of gas at atmospheric pressure, although a certain quantity of exhaust gas and water vapour is directed towards this tangential inlet of the vortex device through a second vortex device. Also it is to be noted that the positive crankcase ventilation gas is not lead directly to the axial inlet to the first mentioned vortex device, but instead passes through a third vortex device into which exhaust gas from the exhaust manifold is injected. The pressure of gas in the exhaust pipe of an engine is at a maximum under maximum acceleration and is at a minimum under deceleration.

Thus, in the device disclosed in US-specification No. 4132247 and 4183338, some of the problems encountered in connection with the device disclosed in US-specification 4112892 are overcome. However, the arrangements disclosed are relatively complex, incorporating three vortex devices.

According to this invention there is provided a combustion control system for an internal combustion engine having an intake manifold with a throttle, a positive crank case ventilation (PCV) gas inlet opening into the intake manifold and an engine exhaust, the control system including a vortex device having a vortex chamber with a tangential inlet, a second inlet and an axial outlet connected to said PCV gas inlet opening of the intake manifold, said second inlet being located at a position substantially opposed to said outlet so that, in use, a vortex is created in said vortex chamber, wherein said tangential inlet of said vortex device is connected to a supply of PCV gas at substantially atmospheric pressure, and an exhaust gas conduit connects said engine exhaust to the said second inlet of said vortex device.

In this arrangement, the PCV gas is introduced to the vortex device through the tangential inlet and exhaust gas is introduced into the second inlet of the vortex device, which may be a substantially central axial inlet. Thus the vortex device is driven by the exhaust gas pressure and has a maximum effect when the engine is undergoing maximum acceleration. The PCV gases, drawn in through the tangential inlet, are caused to swirl within the vortex device and are initially separated from the exhaust gases. Thus the PCV gases are not greatly heated by the exhaust gases.

In a preferred embodiment of the invention ejector means are provided in the said exhaust gas conduit for pumping an additional fluid into said exhaust gas conduit and sending it into said vortex chamber. Thus, in one embodiment of the invention the exhaust gas conduit connecting the engine exhaust to the said second inlet of the vortex device has first and second parallel ejectors with an air inlet opening beyond said first ejector, through which air is pulled into said conduit by the action of the exhaust gas passing through said first ejector, there being a gas outlet beyond said second ejector through which some of said exhaust gas is expelled, there also being a fluid outlet between said gas outlet and said second ejector, so that fluid may be entrained in a stream of exhaust gas expelled from said second ejector, at least some of which passes through an air intake opening connected to said air inlet opening which regulates the air intake into said exhaust gas conduit.

The fluid may be water, and in a preferred embodiment a cusp-like curved wall is provided leading to said axial outlet of the vortex device, and a first venturi tube connects said axial outlet to said PCV gas inlet opening of said intake manifold, and a second venturi tube connects said tangential inlet to said supply of PCV gas.

Preferably a needle valve defines said air inlet opening, regulating air intake into said exhaust gas conduit.

Advantageously, said intake manifold has a butterfly valve constituting said throttle, said PCV gas inlet opening into said intake manifold below said butteryfly valve, there being an auxiliary conduit smaller in diameter than said exhaust gas conduit and opening from it ahead of said first ejector, said auxiliary conduit having said second ejector therein.

It is to be understood that fluids, such as water or water vapour, have heretofore been added to the induction system of an internal combustion system. However, the prior proposed systems did not obtain the full benefits which can be obtained by proper regulation of the amount and condition of the added fluid.

It has been determined that an engine needs different amounts of fluids at varying conditions of operation of the engine. The best engine operation is characterized by a complete lean, clean combustion emission of HC, CO, and $NO_x$, and best fuel economy without detonation (pinking), pre-ignition or after-fire (dieseling), together with highest power at full-throttle. The need of an engine for fluid varies widely from no fluid at all under certain conditions of operation, to amounts of fluid flow in the same order of magnitude as fuel flow at other conditions of engine operation. For example, the engine's need for fluid is zero when the engine is not operating, as no liquid can be permitted to flow into an engine when the engine is not operating. If any liquid did flow into an engine in such condition, there would be a severe risk of corrosion or other damage being effected to the engine, particularly if the liquid is water.

At normal, steady state, low-speed idling, only a trace amount of fluid, or no fluid at all, is required to control the quality of the emissions given off by the engine. Increasing quantities of fluid proportionate to the power output of the engine are required as engine power is increased, at each steady state point. Under dynamic conditions such as, for example, under acceleration conditions, an extra amount of fluid is required over and above the amount required during operation at a steady-state condition, and in the case where the fluid is steam, the steam should be of a lower quality (i.e. with a certain percentage of water droplets carried by the steam in order to give maximum combustion cooling) to keep nitrous oxide emissions within satisfactory limits. In contrast, on deceleration, less fluid is required at each point during deceleration than would be required for steady-state operation at that point.

It is to be understood that the supply of fluid must be limited to an amount that will not hurt the combustion process. For instance, during deceleration, if the supply of fluid is not limited, too much fluid can be introduced to the engine, causing the resultant combustion to be poor. This will produce incomplete combustion and will cool the flame sufficiently that undesirable amounts of HC and CO will be produced. Engine efficiency can thus be seriously impaired, and hydrocarbon deposits will increase.

On acceleration, the engine's need for fluid is dependent on introducing the right amount of fluid to absorb excess heat, by its high specific heat plus latent heat of evaporization of liquid droplets included (water droplets in the case of steam) plus heat of dissociation; excess engine heat generation would otherwise go toward producing high combustion and surface peak temperatures and peak pressures about top dead center. However, this heat absorption must still be accomplished without introducing too much fluid which might otherwise impair combustion with the consequent undesirable effects noted above. By introducing the right amount of additional fluid, the energy is absorbed as the latent heat of vaporisation of water as steam is created (in the case where the fluid is water). This energy is subsequently given back during the latter part of the cycle as the steam expands. This energy is thus recovered at a favourable crank angle and adds to the smooth operation of the engine.

It will be understood that the correct amount of fluid introduced at the correct time may prevent hot spots and may smooth the pressures obtained within the cylinder of the engine.

It is to be understood that the right amount of fluid needs to be introduced to an engine to provide for engine cleanliness. The right amount of fluid will ensure clean combustion and will assist in removal of engine deposits.

In order to optimise the operation of an engine it is desirable to inject the right amount of heat in order to heat and thereby vapourise the fuel to give an equal fuel-air ratio distribution and mass distribution among the various cylinders. This has been found to give maximum economy and lowest emissions. Extra charge density can be provided by introducing fluid droplets in the fuel-air mixture charge at full throttle or during high power operation. The fluid droplets, if introduced into the cylinder at the proper time before valve closure, cool the charge so as to increase the charge density before valve closure, and thus, in effect, provide a form of supercharging.

Prior attempts to introduce fluids into the engine have relied primarily on the intake manifold vacuum as the driving force to induce liquid flow. This has the disadvantage of having the greatest vacuum (and hence the largest driving force for liquid flow) at the condition when the engine needs the least or no addition of liquid (throttle closed). In addition, when the engine requires the greatest liquid flow (during acceleration or when under heavy load) manifold vacuum is at a minimum.

A preferred embodiment of this invention permits the control of an added amount of fluid and heat energy, PCV gases and air, in relation to engine need at all conditions of operation of the engine. The preferred embodiment of the invention utilizes the changing vacuum condition at a PCV inlet located below the butterfly valve of an intake manifold, in combination with the changing exhaust gas pressure and temperature, to control the quantity and quality of the liquid introduced to the engine, and also to control (in proper relationship to the liquid) the amounts and proportions of exhaust gas, PCV gas and air that are added.

It is to be understood that in the described embodiment exhaust gas passes through an auxiliary conduit and is ejected from an ejector. Whilst in the auxiliary conduit the gas passes a fluid outlet and thus water becomes entrained in the exhaust gas. The exhaust gas then enters the general atmosphere and at least part of the exhaust gas is subsequently drawn into the gas inlet located between an ejector and an inlet to a venturi device.

In this particular embodiment the ejectors effectively draw in the needed amounts of air and aqueous fluid and send them into the vortex chamber, without a coupling between the aqueous fluid ejector outlet and the intake manifold vacuum.

In order that the invention may be more readily understood and so that further features thereof may be appreciated, the invention will now be described by way of example with reference to the accompanying drawings in which:

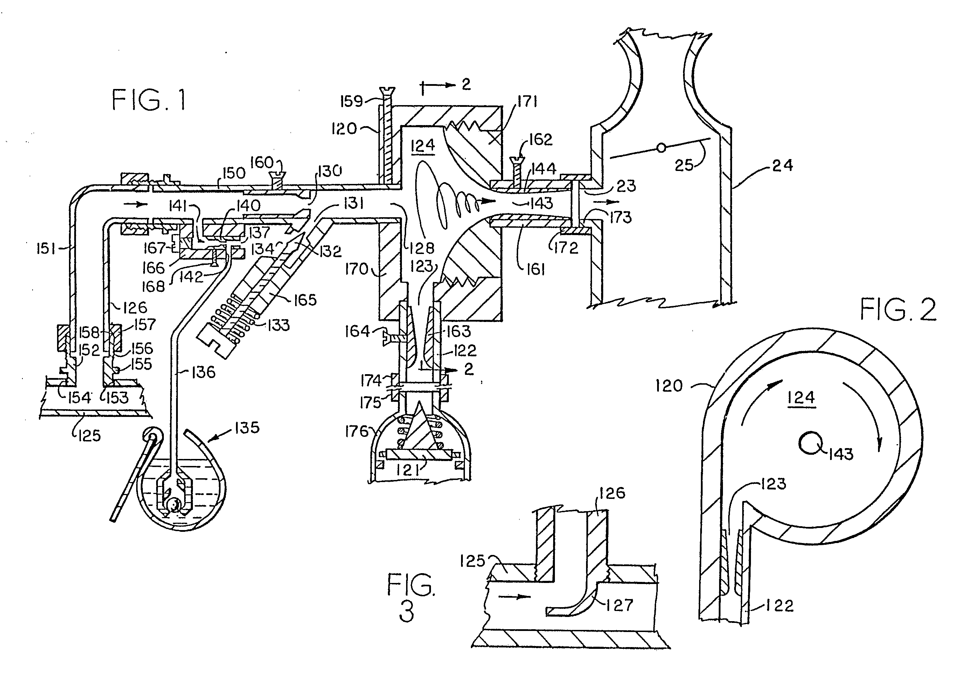

Fig. 1 shows a vortex unit 120 connected to an intake manifold 24 of an internal combustion engine below a butterfly valve 25 and preferably using a standard PCV valve entrance 23 therewith. The connection between the vortex unit 120 and the intake manifold 24 may be substantially the same as in Fig. 1 of US. Patent No. 4 183 338 or if desired the grooves 84 shown there may be omitted. In the present form of the invention, the PCV gases may flow past a PCV valve 121, through a conduit 122, and via a small orifice or nozzle 123 tangentially enter a vortex chamber 124 in the vortex unit 120, shown also in Fig. 2. Actually, the PCV valve 121 exercises little, if any, control and may be removed and discarded, the main control being at the vortex 124 itself. In most instances the PCV valve, if left in place, will not even move, and the total control is exercised at the vortex 124.

Gas under pressure is picked up from an exhaust manifold 125 and conducted through a conduit 126. If desired, as shown in Fig. 3, there may be a scoop 127 to aid in getting the gases from the exhaust manifold 125 to flow into the tube 126. The scoop 127 is not required unless there is a low back pressure due to exhaust system tuning or the absence of a silencer. In distinction to the device of US. Patent No. 4 183 338 the vortex unit 120 is placed as close as possible to the intake manifold 24 and need not be as close to the exhaust manifold 125. The conduit 126 may be a stainless steel tube and may be provided with suitable insulation to retain heat. Preferably, the conduit 126 is relatively small in diameter to avoid heat losses also. For example, on larger automotive engines, thin-wall tubing with an outer diameter of about 6.3 mm (1.4 inch) and with a wall thickness of about 0.11 mm (0.020 inch) may be used; for smaller engines the conduit 126 may have an outer diameter of about 4.8 mm (3/16 inch).

The conduit 126 leads into the axial center line of the vortex unit 120 at an inlet 128. In the conduit 126 ahead of the inlet 128, is a first ejector 130 which is used to pull air into the conduit 126 through an inlet port 131. Carbon deposits are avoided by omitting any diffuser section and simply following the ejector with the full inner diameter of the conduit 126. By spacing the ejector 130 well ahead of the inlet 128—by at least twice the diameter of the ejector nozzle, good ejector pumping is obtained. The amount of air which can be drawn into the conduit 126 is controlled by a needle valve 132. A spring 133 may be used to keep the needle valve 132 from turning accidentally, due to vibration. The needle valve 132 controls an air intake orifice 134 by axial threaded adjustment.

A reservoir 135 for water or the like, is provided with a conduit 136 which leads up to a constant diameter (e.g. drilled) outlet 137 just beyond a second ejector 140 in parallel with the first ejector 130. Exhaust gas from the conduit 126 passes by a passage 141 to the ejector 140, and an outlet 142 is about 3.2 mm (1/8 inch) from the exit of the outlet 137, and the outlet 137 is in line and spaced only about 6.3 mm (1/4 inch) from the air intake 134 for the needle valve 132, so that when the stream pressure builds up through the ejector 140 it carries moisture into the inlet 134 and therefore via the valve 132 and the port 131 into the vortex 124.

An important feature of this embodiment of the invention is that it prevents any coupling of the intake manifold pressure to the water outlet 137, which if it took place, would by itself draw water into the vortex 124 in excessive amounts. By having the outlet 137 separated from the inlet 134, with atmospheric pressure air space in between, such coupling is positively prevented, and instead there is a decoupling. The function is, of course, to prevent excess amounts of moisture from being drawn in due to a coupling effect. It is important that there be no coupling at all under engine idle conditions and deceleration conditions, when no additional moisture is desired, and this, of course, is the time when the vacuum in the intake manifold is highest and most likely to cause coupling were the structure different and were the water connected directly into the inlet 128.

The operation of the device of Figs. 1 and 2 is as follows: The PCV products come in through the orifice 123 tangentially into the vortex 124. As shown in Fig. 2, these gases may rotate clockwise, and this would be the ideal arrangement for southern hemisphere operations and the equivalent; the opposite (counter-clockwise) rotation would be used in the northern hemisphere. Thus, the PCV gases are initially separated from and are therefore not greatly heated by the exhaust gases. Meanwhile, the exhaust gases are being cooled by the air and the water. The rotating PCV products put also into rotation the exhaust gas, the air and the water which enter into the center of the vortex 124. These together in rotation create a choking action at the exit 143 of the vortex 120, and this results in a high impedance to fluid flow-through past the exit 143 through a venturi-like member 144 into the intake manifold 24. To prevent deposit of solids, the venturi 144 should diverge on its outlet side by no more than about 12° and preferably less than 6°, and the vortex 124 should have its tapered or curved wall, preferably shaped like a cusp curve, curved quite smoothly into the venturi inlet. The venturi-like orifice 143 has a minimum cross-sectional area designed to accelerate the gas flow to a sonic velocity at its narrowed point. The optimum cross-sectional area is a linear function of the cubic displacement of the engine, Nevertheless, a very high degree of rotational energy does enter below the butterfly valve 25 and creates a high degree of turbulence as it intermixes with the fuel and the air of the carburetor. This turbulence is a great deal of help in providing much more uniform mixing of the fuel-air mixture, and in the case, also of the added exhaust heat, moisture when provided, air, and the PCV products. It also is the means by which the flow of PCV products is itself properly monitored, as it provides a high impedance to flow at deceleration and idle so that only a small amount of PCV products then flows. As the butterfly valve 25 is opened and the vacuum in the intake manifold 24 decreases such that at full-throttle it is only $17 \times 10^3$ Pa (1/2 inch, mercury) approximately.

This, then, reduces the amount of difference in pressure between the intake manifold 24 and the atmospheric pressure at the PCV tube entrance (i.e., essentially atmospheric pressure) at the PCV valve 121.

At full throttle, because of the low pressure differential across the vortex 124, (the PCV tangent entrance 123 is at atmospheric pressure and the intake manifold 24 is only $17 \times 10^3$ Pa (1/2 inch Hg) below atmospheric pressure at full-throttle), there is almost no force to create tangential flow. Consequently, vortex rotational flow essentially stops at full-throttle, and the impedance to flow through the vortex 124 including the vortex choke point 143 is substantially zero. Therefore, flow is maximum.

As the throttle 25 is gradually closed, the intake manifold vacuum increases, thus increasing the pressure differential across the vortex 124. The higher the vacuum the higher the tangent PCV mass flow momentum with its resultant increased impedance to fluid flow at the orifice 143. Conservation of momentum causes the mass in rotation to accelerate to higher and higher rotational speeds as the radius of rotation decreases. The axial flow becomes very small as the rotational speed increases. With this the axial flow of all fluids becomes very low.

Because of the high pressure differential at the exit 143, there is no appreciable pressure differential across the PCV valve 121, and that valve stays full open. In fact, in the ideal situation, the PCV valve is removed, and a plastic shell having the same shape may be substituted at this point. The PCV products are controlled, therefore, by the vortex generator 120 and the impedance created at the exit 143. This same varying impedance at the exit 143 for the same reason, controls the total mass flow that comes in with exhaust heat, past the ejector 130 and the amount of water and air that are allowed to come in, because the major impedance to the whole system is controlled at the exit 143. The ratios of the amount of exhaust gas and air and the PCV products are controlled by the ratio of the orifices controlling each one.

The needle valve 132 is also useful in providing an adjustment for idle air control in cars where the former adjustability of the idle mixture control valve has been taken away.

One of the key features shown in Fig. 1 is that of reducing the amount of energy used in the control system. In the arrangement disclosed in US. Patent 4,183,338 there is used rotational energy for each of the major controls, which consumes much more energy than is common when the presently described ejector 130 is used and when orifices accomplish the same flow control and preserve the maximum amount of energy, which is in a form of pressure differential so that it can appear across the vortex 120 to create the maximum amount of turbulence as it leaves the vortex generator; thus, the maximum amount of turbulence enters below the butterfly valve and causes the maximum amount of mixing of the fuel-air products before the mixture reaches the combustion chamber.

Fig. 1 also shows a significant embodiment enabling rapid installation and also rapid part changes and adjustments. Thus, the exhaust gas conduit 126 may, as shown, be made in three sections 150, 151 and 152, the sections 150 and 152 being straight and the sections 151 being a connecting section. The section or fitting 152 has a threaded end 153 that fits into a threaded opening 154 in the exhaust manifold 125, and a hexagonal flange 155 near its center. The section 152 may have a threaded end 156 joined to the section 151 by a standard swage type fitting 157 with a seal 158. An identical fitting may be used to join the sections 151 and 150. Insulation is not illustrated but is preferably provided around the full length of the conduit 126, and also around the vortex member 120 and other parts that are to be kept hot. The section 150 may be secured to the vortex member 120 by a slip fit and held in place by a set screw 159, or the members 120 and 150 may be made as a single piece or brazed together.

The first ejector 130 may be slipped inside the tube section 150 and held in place by a set screw 160, enabling some adjustment longitudinally, or may be made as a single piece, if desired. Similarly, the venturi tube 144 may be held in a connecting tube 161 (which connects the vortex member 120 to the intake manifold 24) by a set screw 162. With this structure, the venturi tube 144 is easily replaced (as for a change in sizes), as is the first ejector 130. This also applies to a venturi tube 163 which supplies the nozzle 123; it fits into the tube 122 and is held in place at a desired location by a set screw 164. Again, unitary construction may be provided if desired.

The needle valve 132 may be in a housing 165 that may be made as a unitary part of the section 150, as by casting, or may be brazed thereto. Similarily, the second ejector 140 may be located in a member 166 that may be an integral portion of the section 150 or brazed thereto. If cast with the section 150, it may be split into two pieces to provide the passage 141 or may be drilled and plugged; if brazed, the passages are provided very simply, and there will be a plug 167 inserted at the dead end. A set screw 168 may hold the second ejector 140 in place.

The vortex member 120 may be made in two pieces 170 and 171, if desired, as shown. The tube 161 and the venturi tube 144 may be integral parts of the piece 171, if desired. Press fits may be used instead of threading, of course.

The various sizes of the parts vary, according to such things as the engine displacement. As an example, for a 3687 $cm^2$ (225 cubic inch) displacement, six-cylinder engine, here are some examples of a workable structure and the best I have made so far:

| Element | Length | Diameter | Orifice |
|---|---|---|---|
| Ejector 130 | 1.27 cm (1/2'') | 6.35 mm (1/4'') | 2.03 mm (0.080'') |
| Ejector 140[+] | 9.52 mm (3/8'') | 3.17 mm (1/8'') | 0.96 mm (0.038'') |
| PCV Venturi 163 | 1.90 cm (3/4'') | 6.35 mm (1/4'') | 2.84 mm (0.112'') |
| Outlet Venturi 144 | 2.54 cm (1'') | 6.35 mm (1/4'') | 4.32 mm (0.170'') |

[+]The orifice outlet 137 is 1.32 mm (0.052 inch) in diameter, to go into the 0.96 (0.038 inch) orifice, and the fluid outlet 142 is spaced 3.17 mm (1/8 inch) from the exit of the outlet 137, which is about 6.35 mm (1/4 inch) from the air inlet 134.

The control assembly, comprising the assembled vortex member 120 along with the section 150 (including the installed ejector 130, the side passage 141 and its installed ejector 140, and the needle valve assembly 132, 133, 165), the tube 122 (with its installed venturi tube 163), and the connection tube 161 (with its installed venturi tube 143) is readily installed in the engine. A flexible hose 172 is used to connect the tube 161 to a fitting 173 at the PCV inlet 23. Similarly, a flexible hose 174 of any suitable length may be used to connect the tube 122 to a tube portion 175 of the PCV valve housing 176. Then the sections 151 and 152 and the conduit 136 may be connected to the section 150.

**Claims**

1. A combustion control system for an internal combustion engine having an intake manifold (2, 4) with a throttle (2, 5), a positive crank case ventilation (PCV) gas inlet opening (2, 3) into the intake manifold (2, 4) and an engine exhaust (125), the control system including a vortex device (120) having a vortex chamber (124) with a tangential inlet (123), a second inlet (128) and an axial outlet (143) connected to said PCV gas inlet opening of the intake manifold , said second inlet (128) being located at a position substantially opposed to said outlet (143) so that, in use, a vortex is created in said vortex chamber, characterized in that said tangential inlet (123) of said vortex device (120) is connected to a supply of PCV gas at substantially atmospheric pressure, and an exhaust gas conduit connects said engine exhaust (125) to the said second inlet (128) of said vortex device.

2. A combustion control system according to claim 1, characterized in that said second inlet (128) of the vortex device (120) is a central axial inlet (128).

3. A combustion control system according to claim 1 or 2, characterized in that ejector means (130) are provided in said exhaust gas conduit (150) for pumping an additional fluid into said exhaust gas conduit (150) and sending it into said vortex chamber (124).

4. A combustion control system according to claim 1 or 2, characterized in that said exhaust gas conduit (150, 151) connecting said engine exhaust (125) to said second inlet (128) has first and second parallel ejectors (130, 140) with an air inlet opening (131) beyond said first ejector, through which air is pulled into said conduit by the action of the exhaust gas passing through said first ejector, there being a gas outlet (137) beyond said second ejector, through which some of said exhaust gas is expelled, there also being a fluid outlet (142) between said gas outlet and said second ejector, so that fluid may be entrained in a stream of exhaust gas expelled from the second ejector (140) at least some of which passes through an air intake opening (134) connected to said air inlet opening (131) which regulates air intake into said exhaust gas conduit (150).

5. A combustion control system according to claim 4, characterized in that a cusp-like curved wall (171) is provided leading to said axial outlet (143), and a first venturi tube (144) connects said axial outlet (143) to said PCV gas inlet opening (23) of said intake manifold (24), and a secod venturi tube (163) connects said tangential inlet (123) to said supply of PCV gas.

6. A combustion control system according to claim 4 or 5, characterized in that a needle valve (132) defines said air inlet opening (134) regulating air intake into said exhaust gas conduit.

7. A combustion control system according to any one of the preceding claims, characterized in that said intake manifold (24) has a butterfly valve (25) constituting said throttle, said PCV gas inlet (23) opening into said intake manifold (24) below said butterfly valve, there being an auxiliary conduit (141) smaller in diameter than said exhaust gas conduit and opening from it ahead of said first ejector, said auxiliary conduit having said second ejector (140) therein.

**Revendications**

1. Système de commande de combustion pour un moteur à combustion interne possédant une tubulure d'admission (24) munie d'un papillon (25), une ouverture (23) d'entrée de gaz à ventilation positive du carter VPC dans la tubulure d'admission (24) et un échappement du moteur (125), le système de commande comprenant un dispositif à vortex (120) possédant une chambre à vortex (124) munie d'une entrée tangentielle (123), une seconde entrée (128) et une sortie axiale (143) reliée à l'ouverture d'entrée de gaz VPC de la tubulure d'admission, cette seconde entrée (128) étant située en un emplacement sis sensiblement à l'opposé de ladite sortie (143) de manière que, en fonctionnement, un vortex soit crée dans cette chambre à vortex, caractérisé en ce que ladite entrée tangentielle (123) du dispositif à vortex (120) soit raccordée à une alimentation de gaz VPC sensiblement sous pression atmosphérique, et un conduit de gaz d'échappement relie l'échappement (125) du moteur à la seconde entrée (128) du dispositif à vortex.

2. Système de commande de combustion selon la revendication 1, caractérisé en ce que ladite seconde entrée (128) du dispositif à vortex (120) est une entrée (128) centrale et axiale.

3. Système de commande de combustion selon la revendication 1 ou 2, caractérisé en ce que des moyens éjecteurs (130) sont prévus dans ledit conduit (150) de gaz d'échappement pour pomper un fluide additionel dans ledit conduit (150) de gaz d'échappement et l'envoyer dans ladite chambre à vortex (124).

4. Système de commande de combustion selon la revendication 1 ou 2, caractérisé en ce que ledit conduit de gaz d'échappement (150, 151) reliant l'échappement du moteur (125) à la seconde entrée (128) possède des premier et second éjecteurs parallèles (130, 140) avec une ouverture d'entrée d'air (131) située au-delà du premier éjecteur, à travers laquelle de l'air est attiré dans ce conduit sous l'action de gaz d'échappement traversant le premier éjecteur, une sortie de gaz (137) étant située au-delà du second éjecteur, à travers laquelle une certaine quantité des gaz d'échappement est expulsée, une sortie de fluid)(142) étant également disposée entre la sortie de gaz et le second éjecteur, de sorte que du fluide puisse être entraîné dans un courant de gaz d'échappement expulsé du second éjecteur (140) dont au moins une partie passe par une ouverture d'admission d'air (134) connectée à l'ouverture d'entrée d'air (131) qui régule l'admission d'air dans le conduit de gaz d'échappement (150).

5. Système de commande de combustion selon la revendication 4, caractérisé en ce qu'une paroi (171) incurvée à la manière d'une pointe est prévu pour conduire à cette sortie axiale (143) et un premier tube Venturi (144) relie cette sortie axiale (143) à l'ouverture d'entrée de gaz VPC (23) de la tubulure d'admission (24) et un second tube Venturi (163) relie l'entrée tangentielle (123) à l'alimentation en gaz VPC.

6. Système de commande de combustion selon la revendication 4 ou 5, caractérisé en ce qu'une soupape à aiguille (132) définit l'ouverture d'entrée d'air (134) régulant l'admission d'air dans le conduit de gaz d'échappement.

7. Système de commande de combustion selon l'une quelconque des revendications précédentes, caractérisé en ce que la tubulure d'admission (24) possède une soupape à papillon (25) constituant ledit papillon, l'entrée de gaz VPC (23) s'ouvrant dans cette tubulure d'admission (24) en aval de la soupape à papillon, un conduit auxiliaire (141) étant prévu qui possède un diamètre plus petit que le conduit de gaz d'échappement et qui s'ouvre dans celui-ci en evant du premier éjecteur, ce conduit auxiliaire étant équipé du second éject (140).

**Patentansprüche**

1. Verbrennungssteuerungssystem für eine Maschine mit innerer Verbrennung, die eine Einlaßleitung (24) mit einer Drossel, einen Gaseinlaß, einer positiven Kurbelgehäusebelüftung (crank case ventilation PCV) in die Einlaßleitung (24) und einen Maschinenauspuff (125) aufweist, wobei das Steuerungssystem aus einer Wirbeleinrichtung (120) die eine Wirbelkammer (124) mit tangentialem Einlaß (123) aufweist, einem zweiten Einlaß (128) und einem axialen Auslaß (143) besteht, der mit der Kurbelgehäusebelüftungs-Gaseinlaßöffnung (PCV) der Einlaßleitung verbunden ist, wobei der zweite Einlaß (128) an einem Ort angeordnet ist, der im wesentlichen gegenüber des Auslasses (143) sich befindet, so daß in der Wirbelkammer im Betrieb eine Verwirbelung hervorgerufen ist, dadurch gekennzeichnet, daß der tangentiale Einlaß (123) der Wirbeleinrichtung (120) mit einer Zufuhr von PCV-Gas bei im wesentlichen atmosphärischem Druck in Verbindung steht, und daß eine Auspuffgasleitung den Maschinenauspuff (125) mit dem zweiten Einlaß (128) der Wirbeleinrichtung verbindet.

2. Verbrennungssteuerungssystem nach Anspruch 1, dadurch gekennzeichnet, daß der zweite Einlaß (128) der Wirbeleinrichtung (120) ein, zentralaxialer Einlaß (128) ist.

3. Verbrennungssteuerungssystem nach Anspruch 1 oder 2, dadurch gekennzeichnet, daß Düseneinrichtungen (130) in der Auspuffgasleitung (150) vorgesehen sind, um ein zusätzliches Fluid in die Auspuffgasleitung (150) zu pumpen und es in die Wirbelkammer (124) zu schicken.

4. Verbrennungssteuerungssystem nach Anspruch 1 oder 2, dadurch gekennzeichnet, daß die Auspuffgasleitung (150, 151), die den Maschinenauspuff (125) mit dem zweiten Einlaß (128) verbindet, erste und zweite parallele Düsen (130, 140) aufweist, mit einer Lufteinlaßöffnung (131) hinter der ersten Düse, durch die Luft in diese Leitung einströmt aufgrund der Tatsache, daß Auspuffgas durch die erste Düse strömt, und daß ein Gasauslaß (137) hinter der ersten Düse angeordnet ist, durch welchen ein Teil des Auspuffgases aufgestoßen wird, daß weiter ein Fluidauslaß (142) zwischen dem Gasauslaß und der zweiten Düse vorgesehen ist, so daß ein Fluid in einer Strömung von Auspuffgas, das aus der zweiten Düse ausgestoßen ist, mitgerissen werden kann, von dem jedenfalls ein Teil durch einen Lufteinlaß (134) strömt, der mit der Lufteinlaßöffnungen (131) in Verbindung steht, die den Lufteinlaß in die Auspuffgasleitungen (150) regelt.

5. Verbrennungssteuerungssystem nach An-spruch 4, dadurch gekennzeichnet, daß ein kuppenartig gekrümmter Wandbereich (171) vorgesehen ist, der zu dem axialen Auslaß (143) führt, und daß eine erste Venturi-Röhre (144) den axialen Auslaß (143) mit der PCV-Gaseinlaßöffnung (23) der Einlaßleitung (24) verbindet, und daß eine zweite Venturi-Röhre (163) den tangen-tialen Einlaß (123) mit der PCV-Gasversorgung verbindet.

6. Verbrennungssteuerungssystem nach Anspruch 4 oder 5, dadurch gekennzeichnet, daß ein Nadelventil (132) die Lufteinlaßöffnung (134) bildet, die den Lufteinlaß in die Auspuffgasleitung reguliert.

7. Verbrennungssteuerungssystem nach einem der vorstehenden Ansprüche, dadurch gekennzeichnet, daß die Einlaßleitung (24) ein Drosselklappenventil (25) aufweist, das die Drossel bildet, daß die PCV-Gaseinlaßöffnung (23) in der Einlaßleitung (24) unterhalb des Drosselklappenventils angeordnet ist, und daß eine Hilfsleitung (141) vorgesehen ist, die einen kleineren Durchmesser als die Auspuffgasleitung aufweist und von der eine Öffnung vor der ersten Düse ist, und daß diese Hilfsleitung in sich die zweite Düse (140) aufweist.

FIG. 1

FIG. 2

FIG. 3

0 055 789